# EUROPÄISCHE PATENTANMELDUNG

(11) **EP 0 796 775 A1**
(43) Veröffentlichungstag der Anmeldung: **24.09.1997**
(21) Anmeldenummer: 97101698.5
(22) Anmeldetag: 04.02.1997
(51) Int. Cl.: B60T 3/00

(54) **Arretierkeil für Fahrzeugräder**

(30) Priorität: 21.03.1996 DE 29605290 U
(71) Anmelder: Alten, Kurt, D-30967 Wennigsen (DE)
(72) Erfinder: Alten, Kurt, D-30967 Wennigsen (DE)
(74) Vertreter: Depmeyer, Lothar

(57) **Zusammenfassung**

Die Erfindung betrifft einen Arretierkeil für Fahrzeugräder. Bei zu beladenden Fahrzeugen ergibt sich der Nachteil, dass sich der Arretierkeil mit dem Beladen der Fahrzeuge verklemmt und dann mit Werkzeugen entfernt werden muss.
Zur Vermeidung dieser Nachteile ist erfindungsgemäss zumindest das mit dem Fahrzeug in Berührung kommende Element (5) des Keils von einer oberen Betriebsstellung aus absenkbar.

## Beschreibung

Die Erfindung betrifft einen vorzugsweise an seinem hinteren Ende mit einem Griff versehenen Arretierkeil für Kraftfahrzeugräder.

Derartige Keile werden häufig beim Rampenbetrieb, also bei andockenden Fahrzeugen benutzt, die be- bzw. entladen werden sollen. Die Keile sollen dabei ungewollte Lageveränderungen des Fahrzeuges vermeiden. Allerdings haben sie den Nachteil, dass der Raddruck auf den Keil mit der Beladung des Fahrzeuges wächst. An sich ist diese Auswirkung nicht nachteilig, jedoch können dann Schwierigkeiten entstehen, wenn das Fahrzeug beladen und zum Abziehen des Fahrzeuges der Keil entfernt werden muss. Der erhöhte Raddruck klemmt nämlich den Keil so stark ein, dass er nur noch mit Gewalt - meist mit unerlaubten Schlagwerkzeugen - entfernt werden kann.

Der Erfindung liegt im wesentlichen die Aufgabe zugrunde, einen Arretierkeil der obigen Art so zu verbessern, dass er unter den vorerwähnten Bedingungen leicht entfernt werden kann, aber auch Träger eines Sensors sein kann, mit dem Rampeneinrichtungen überwacht bzw. gesteuert werden können.

Zur Lösung dieser Aufgabe ist erfindungsgemäss zumindest das mit dem Rad in Berührung stehende Element des Keils von einer oberen Betriebsstellung des Keils aus absenkbar. Zweckmässigerweise ist dabei der Keil - vorzugsweise an seinem dem Rad abgekehrten Ende - mit einer Stütze versehen, auf der sich der Keil im Betriebszustand abstützt und die einklappbar oder einfahrbar ist, um so den Keil bzw. sein die Kontaktfläche aufweisendes Element abzusenken, wobei dieses Absenken vorzugsweise gegen Federkräfte vonstatten gehen kann.

Mit dem Absenken des Keils bzw. seines Elementes wird der Kontakt zum Rad praktisch aufgehoben bzw. der Raddruck zumindest sehr stark herabgesetzt, um dann den Keil in einfacher Weise von Hand abziehen zu können, ohne dazu grössere Kräfte aufwenden zu müssen. Das Absenken des Keils kann bei mit Sensoren ausgestatteten Keilen auch den Vorteil haben, den Keil gewissermassen von einer dem Sensor dienenden Beobachterstellung aus in eine reguläre Stütz- und Arretierstellung zu führen.

Besonders vorteilhaft ist es, den Griff des Keils so auszubilden, dass er in der Lage ist, die erwähnte Stütze einzuklappen. Dazu kann auch der Griff selbst nach Lösen einer Sperre klappbar ausgeführt werden.

Weitere Einzelheiten der Erfindung werden anhand der Zeichnung erläutert, in der ein Ausführunsgbeispiel der Erfindung dargestellt ist. Es zeigen :
Fig. 1 einen Arretierkeil für Fahrzeugräder im senkrechten Schnitt, und zwar in Wirkstellung,
Fig. 2 den Heil gemäss Fig. 1 in abgesenkter Stellung,

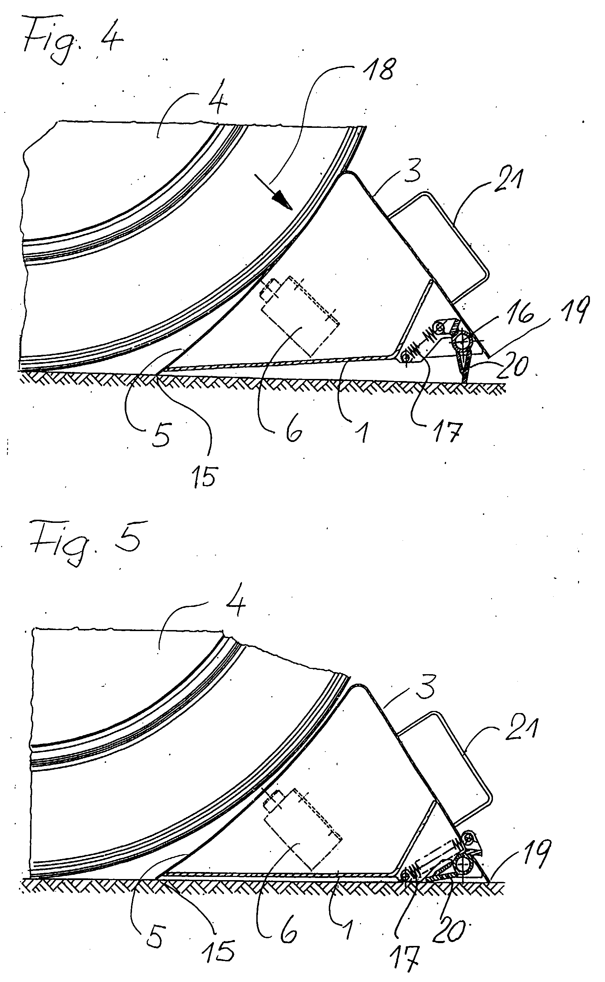

Fig. 3 den Heil gemäss Fig. 1 in der Rückenansicht,
Fig. 4 einen abgewandelten Keil in angehobener Stellung
   und
Fig. 5 den Keil gemäss Fig. 4 in abgesenkter Stellung.

Der Arretierungs- oder Radkeil ist in Kastenbauweise ausgeführt, er hat eine Bodenwand 1, Seitenwände 2, eine Rückwand 3 und eine Anlagefläche für das Fahrzeugrad 4 aufweisende, geringfügig konkav gebogene Wandung 5, eine oder mehrere kleine Durchbrechung z.B. für innerhalb des Heils befindliche Sensoren 6 od. dgl. aufweisen kann.

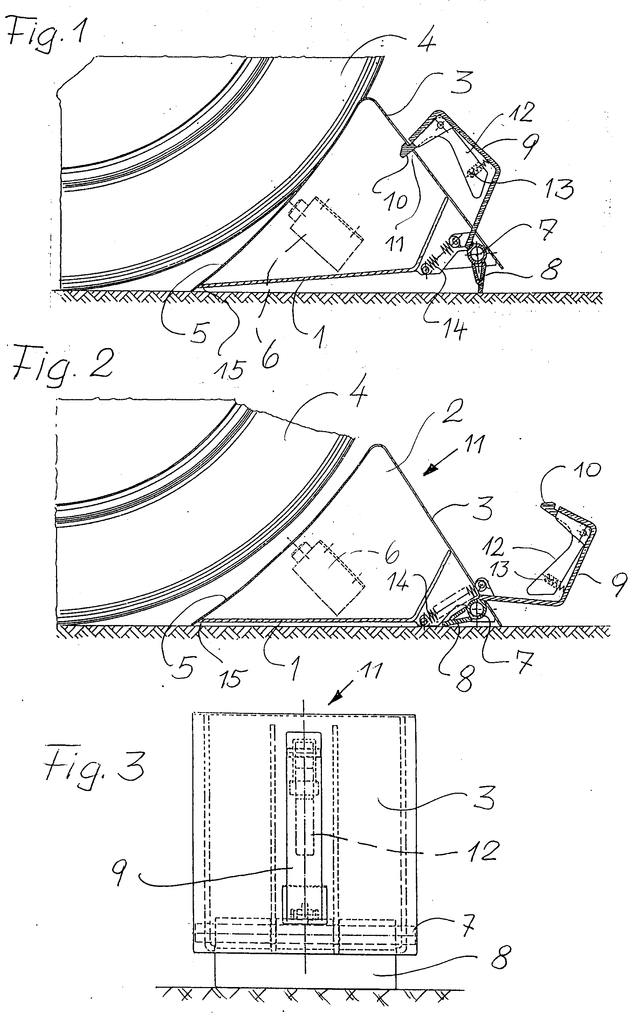

An seinem hinteren Ende weist der Keil eine Querachse 7 auf, die zur verschwenkbaren Lagerung eines Doppelhebels dient, dessen kürzerer, unten spitz auslaufender Arm 8 als Stütze für den Keil dienen kann, und dessen anderen, oben gelegener Arm als Handgriff 9 ausgeführt ist. An seinem freien Ende ist der Handgriff 9 mit einer Klinke 10 ausgestattet, die einen Rand einer Ausnehmung 11 in der Rückwand 3 hinterfassen kann ( Fig. 1 ). In dieser Stellung des Handgriffes 9 ist der Arm 8 ausgeklappt; er dient als Stütze zum Unterfangen des Keils in seiner Betriebsstellung. In diese Wirkstellung gelangt der Keil von Hand durch Erfassen des Handgriffes 9 und Unterschieben unter das Fahrzeugrad.

In dieser Lage dient der Keil der Arretierung des Fahrzeugrades 4, das den Keil bzw. die Wandung 5 in ihrem oberen Bereich mit zunehmender Beladung des Fahrzeuges belastet.

Soll das Fahrzeug abgezogen, also der Keil entfernt werden, so wird durch Erfassen des Handgriffes 9 und eine Betätigung eines im Handgriff 9 befindlichen Klinkenhebels 12 gegen eine Druckfeder 13 die Klinke 10 ausgerastet. Durch eine zurückziehende Klappbewegung des Handgriffes 9 gegen die Wirkung einer sich dabei spannenden Zugfeder 14 wird der Arm 8 eingeklappt, wobei der Keil um seine vorne aufliegende Spitze 15 als Schwenkachse abgesenkt wird. Dabei kommt die Wandung 5 frei, und nunmehr kann der Keil ohne weiteres nach hinten abgezogen werden.

Durch Einklappen des Handgriffes 9 unter dem Einfluss der Zugfeder 14 in die Raststellung der Klinke 10 gemäss Fig. 1 ist der Keil für einen neuen Einsatz vorbereitet.

Es sei erwähnt, dass der Arm 8 deshalb nicht unerhebliche Stützkräfte übertragen kann, weil er an einer steifen Querachse 7 angelenkt ist und sich praktisch über die Breite des Keiles erstreckt. Seine Spitze ist im übrigen vorteilhaft im Hinblick auf eine erwünschte Standfestigkeit des Keiles.

Die Feder in Form der Zugfeder 14 hat den Vorteil, dass sie stets bestrebt ist, die Stellung des Handgriffes 9 bzw. der Sütze 8 gemäss Fig. 1 immer wieder einzunehmen. Damit ist sichergestellt, dass der unbenutzte Keil stets eine ausgefahrene bzw. ausgeklappte Stütze 8 aufweist und die Bedienungsperson den Keil nur in angehobenem Zustand, also bei ausgeklappter Stütze 8 in die Betriebsstellung gemäss Fig. 1 bringen kann.

Der Keil gemäss Fig. 4 und 5 ist vorwiegend für Überwachungs- und Steuerungszwecke bestimmt, indem ein hierin befindlicher Sensor 6 die an einer Verladerampe befindlichen Einrichtungen z.B eine Überladebrücke steuert bzw. überwacht. Hier ist ebenfalls eine Stütze 20 vorgesehen, die um eine Querachse 16 verschwenkbar ist. Diese Stütze steht unter der Wirkung einer Zugfeder 17 in der Weise, dass sie die Stütze 20 stets in der ausgeklappten Stellung gemäss Fig. 4 halten möchte, allerdings gegen die Wirkung der Zugfeder 17 ein Einklappen der Stütze 20 mehr oder weniger stark, schliesslich aber bis in den eingeklappten Zustand gemäss Fig. 5 zulässt.

Der Keil hat ebenfalls einen Handgriff 18: dieser steht jedoch mit der Stütze 20 in keiner Wirkverbindung.

Bei ausgeklappter Stütze 20 wird der Keil gemäss Fig. 4 an das Fahrzeugrad 4 angesetzt, um so durch den Sensor 6 eine Überwachungs- oder Steuerfunktion einer Überladebrücke bewirken zu können. Erfährt dabei der Reifen des Fahrzeugrades 4 eine Verformung z.B. durch Beladen des Fahrzeuges, so gibt aufgrund des Reifendruckes in Richtung des Pfeiles 18 die Zugfeder 17 nach unter Einknicken der Stütze 20 bzw. einer Schwenkbewegung in Richtung auf das Fahrzeugrad 4. Dabei senkt sich der Keil ab, und zwar so lange, bis die hinten gelegene Kante 19 des Keiles in der Fahrbahn ihr Widerlager findet. In diesem Zustand wirkt der Keil wie ein normaler, nicht absenkkbarer, starrer Keil; er bietet in diesem Zustand einen entsprechenden Widerstand gegen ungewollte Bewegungen des Fahrzeuges. Der Keil kann dann nach beendeter Rampenarbeit abgezogen werden.

Bei den meisten Anwendungsfällen erfährt der Keil wahrend des Rampenbetriebes nur eine so geringe Eindrückung seiner Stütze 20, dass eine Berührung der Fahrbahn durch die Kante 19 noch nicht stattfindet. In diesem Falle wird über den Handgriff 21 der hintere Teil des Keiles gegen die Wirkung der Zugfeder 17 so weit abgesenkt, dass die Wandung 5 freikommt. Alsdann kann der Keil ohne weiteres nach hinten abgezogen werden.

## Patentansprüche

1. Arretierkeil für Fahrzeugräder, dadurch gekennzeichnet, dass zumindest das mit dem Fahrzeugrad (4) in Berührung stehende Element (5) des Keils von einer angehobenen Stellung aus absenkbar ist.

2. Keil nach Anspruch 1, dadurch gekennzeichnet, dass der Keil an seinem hinteren, dem Fahrzeugrad (4) abgekehrten Ende mit einer ein- und ausfahrbaren, insb. aber ein- und ausklappbaren Stütze (8,15) versehen ist.

3. Keil nach Anspruch 2, dadurch gekennzeichnet, dass die Stütze (8) zum freien Ende hin spitz ausläuft.

4. Keil nach Anspruch 2, dadurch gekennzeichnet, dass sich die Stütze (8) über den grössten Teil der Breite des Keils erstreckt.

5. Keil nach Anspruch 2, dadurch gekennzeichnet, dass die Stütze (8) der untere Arm eines Doppelhebels ist, dessen anderer, oben gelegener Arm einen ein- und ausrastbaren Handgriff (9) bildet.

6. Keil nach Anspruch 5, dadurch gekennzeichnet, dass der Handgriff (9) einen daran gelagerten Klinkenhebel (12) zur Bedienung von Hand aufweist und die von ihm betätigte Klinke (10) am freien Ende des Handhebels (9) angeordnet ist und im eingerasteten Zustand einen Rand einer Ausnehmung (11) in der Rückwand (3) des Keils unterfasst.

7. Keil nach Anspruch 2, dadurch gekennzeichnet, dass er in der angehobenen Stellung ( Betriebsstellung ) auf der vorne gelegenen Spitze (15) des Keils und am hinteren Ende auf der Stütze (8) abstützt.

8. Keil nach Anspruch 5, dadurch gekennzeichnet, dass der Doppelhebel an einer Schwenkachse (7) angelenkt ist, die sich praktisch über die Breite des Keils erstreckt.

9. Keil nach Anspruch 5, dadurch gekennzeichnet, dass der Handgriff (9) unter der Wirkung einer Feder (14) selbsttätig in die Raststellung einschwenkbar ist.

10. Keil nach Anspruch 7, dadurch gekennzeichnet, dass die dem Fahrzeugrad (4) zugekehrte Wandung (5) des Keils in ihrem oberen Teil vom Fahrzeugrad beaufschlagbar und der Keil zum Absenken um eine durch seine Spitze (15) bestimmte Achse nach unten schwenkbar ist.

11. Keil nach Anspruch 2, dadurch gekennzeichnet, dass die Stütze (8) gegen eine Rückstellkraft (14) einfahr- bzw. einklappbar und unter der Wirkung der Rückstellkraft in die Wirkstellung ausfahrbar- bzw. ausklappbar ist.

12. Keil nach Anspruch 5 und 11, dadurch gekennzeichnet, dass die Rückstellkraft (14) auf den Doppelhebel einwirkt.

13. Keil nach Anspruch 2, dadurch gekennzeichnet, dass die Stütze (20) durch Federkraft in ausgefahrener bzw. ausgeklappter Stellung gehalten und durch Überwinden der Federkraft einfahrbar bzw. einklappbar ist.

14. Keil nach Anspruch 13, dadurch gekennzeichnet, dass sich der Keil bei eingefahrener bzw. eingeklappter Stütze (20) vorne auf seiner Spitze (15) und hinten auf seiner hinteren Kante (19) abstützt.

15. Keil nach Anspruch 13, dadurch gekennzeichnet, dass die Stütze (20) der untere Arm eines Doppelhebels ist, an dessen oberem Arm eine Zugfeder (17) angreift.

16. Keil nach Anspruch 13 mit einem Sensor (6) zum Steuern bzw. Überwachen einer Rampeneinrichtung insb. einer Überladebrücke.
